# EUROPÄISCHE PATENTSCHRIFT

(11) **EP 1 502 166 B1**
(45) Veröffentlichungstag und Bekanntmachung des Hinweises auf die Patenterteilung: **10.01.2007**
(21) Anmeldenummer: 02794988.2
(22) Anmeldetag: 11.12.2002
(51) Int. Cl.: G05D 1/02, B62D 6/00, B62D 15/02

(54) **QUERFÜHRUNGSUNTERSTÜTZUNG BEI KRAFTFAHRZEUGEN**
LATERAL GUIDANCE ASSISTANCE FOR MOTOR VEHICLES
ASSISTANCE AU SUIVI DE VOIE POUR VEHICULES AUTOMOBILES

(30) Priorität: 23.04.2002 DE 10218010
(43) Veröffentlichungstag der Anmeldung: 02.02.2005
(73) Patentinhaber: ROBERT BOSCH GMBH, 70442 Stuttgart (DE)
(72) Erfinder: BRAEUCHLE, Goetz, 74934 Reichartshausen (DE); HEINEBRODT, Martin, 70176 Stuttgart (DE)
(86) Internationale Anmeldenummer: PCT/DE2002/004540
(87) Internationale Veröffentlichungsnummer: WO 2003/091813

(56) Entgegenhaltungen:
- EP-A- 0 806 336
- DE-A- 10 018 873
- US-B1- 6 185 492

## Beschreibung

### STAND DER TECHNIK

Die Erfindung betrifft ein Verfahren zur Querführungsunterstützung bei Kraftfahrzeugen, bei dem ein Sollwert für die Querposition des Fahrzeugs bestimmt wird, die Ist-Position des Fahrzeugs relativ zu den Grenzen der befahrenen Spur mit einer Sensoreinrichtung erfaßt wird und durch Soll/Ist-Vergleich ein Ausgangssignal für die Querführungsunterstützung berechnet wird, sowie eine Vorrichtung zur Durchführung dieses Verfahrens.

Ein solches Verfahren ist aus der Druckschrift EP 0 806 336 bekannt.

Die Druckschrift DE 100 18 873 zeigt eine Folgeführung für ein Kraftfahrzeug, bei der der Sollwert für die Querposition auf Grundlage der Seitelinien und/oder einer potentiellen Kollisionsgefahr variiert wird.

Die Druckschrift US 6 185 492 zeigt die Variation eines Sollwertes für die Querposition innerhalb einer Fahrspur auf Grundlage von Fahrervorgaben oder erlernten Fahrerpräferenzen.

In keiner der genannten Druckschriften werden jedoch Objekte auf Nebenspuren zur Bestimmung des Sollwertes der Querposition des Fahrzeugs herangezogen.

In Kraftfahrzeugen werden zunehmend Systeme eingesetzt, die den Fahrer bei der Fahrzeugführung unterstützen oder ihm spezielle Fahrmanöver erleichtern (Advanced Driver Assistance Systems; ADAS). Eine Funktion dieser Systeme ist die Querführungsunterstützung (Lane Keeping Support; LKS). Dabei wird die Ist-Position des Fahrzeugs relativ zu der befahrenen Fahrspur ermittelt und mit einem Sollwert verglichen, der typischerweise der Mitte der Spur entspricht. Das Ausgangssignal besteht dann in einem Stellsignal für einen Aktor, der in das Lenkungssystem des Fahrzeugs eingreift, sei es um den Fahrer durch ein zusätzliches Lenkdrehmoment zu unterstützen oder um eine völlig autonome Querführung durchzuführen, die keinen Eingriff des Fahrers mehr erfordert.

### AUFGABE, LÖSUNG UND VORTEILE DER ERFINDUNG

Aufgabe der Erfindung ist es, ein Verfahren zur Querführungsunterstützung zu schaffen, das weitgehend dem üblichen Fahrverhalten von Kraftfahrern entspricht.

Diese Aufgabe wird erfindungsgemäß dadurch gelöst, daß Objekte auf mindestens einer Nebenspur geortet werden und der Sollwert für die Querposition in Abhängigkeit von Ortungsdaten dieser Objekte variiert wird.

Es entspricht dem natürlichen, intuitiven Verhalten eines Kraftfahrers, daß er nicht ständig die Mitte der befahrenen Fahrspur einhält, sondern seine Spurlage in Abhängigkeit von der Verkehrssituation variiert. Beispielsweise haben viele Kraftfahrer die Tendenz, beim Überholen eines langsameren Fahrzeuges auf der rechten Nebenspur etwas nach links versetzt zur Spurmitte zu fahren, um einen größeren Sicherheitsabstand zu dem überholten Fahrzeug einzuhalten. Ebenso neigen viele Kraftfahrer dazu, etwas nach rechts versetzt zur Spurmitte zu fahren, wenn sie selbst überholt werden, oder ihnen ein Fahrzeug entgegen kommt und die Gegenfahrbahn nicht durch Leitplanken oder dergleichen von der eigenen Fahrbahn abgetrennt ist, etwa im Baustellenbereich auf Autobahnen. Durch das erfindungsgemäße Verfahren wird dieses natürliche Verhalten von Kraftfahrern nachgebildet. Hierdurch wird nicht nur eine tatsächliche Erhöhung der Verkehrssicherheit erreicht, sondern vor allem auch dem Sicherheitsgefühl des Fahrers Rechnung getragen und damit der Komfort gesteigert und das Vertrauen des Fahrers und der Fahrzeuginsassen in das ADAS-System gestärkt und folglich die Akzeptanz solcher Systeme erhöht.

Für die Durchführung des Verfahrens wird eine Objekterfassungseinrichtung benötigt, die in der Lage ist, die Ortungsdaten über die Objekte auf den Nebenspuren bereitzustellen. Die erforderliche Hardware für eine solche Objekterfassungseinrichtung ist jedoch in Kraftfahrzeugen mit ADAS-Systemen in der Regel ohnehin verfügbar. Beispielsweise wird die Sensoreinrichtung, die zur Bestimmung der Ist-Position des Fahrzeugs relativ zu den Grenzen der Fahrspur dient, häufig durch ein Kamerasystem gebildet, beispielsweise eine oder mehrere Videokameras in Verbindung mit einer (Stereo-) Bildverarbeitungseinrichtung. In diesem Fall können auch die Ortungsdaten über die Objekte auf den Nebenspuren von der Bildverarbeitungseinrichtung geliefert werden.

In der Regel umfaßt das ADAS-System neben dem Querführungssystem auch ein weiteres Teilsystem für die Längsführungsunterstützung, beispielsweise in der Form eines ACC-Systems (Adaptive Cruise Control). Im Rahmen eines solchen Systems werden die Abstände und Relativgeschwindigkeiten vorausfahrender Fahrzeuge auf der eigenen Spur und auch auf Nebenspuren mit Hilfe eines richtungssensitiven Abstandssensors, beispielsweise eines Radar- oder Lidar-Sensors erfaßt, und die Geschwindigkeit des eigenen Fahrzeugs wird automatisch so angepaßt, daß das unmittelbar vorausfahrende Fahrzeug in einem angemessenen Sicherheitsabstand verfolgt wird. Zur Ortung von Objekten auf Nebenspuren können dann auch die Signale eines solchen Abstandssensors - ggf. in Kombination mit den vom Bildverarbeitungssystem gelieferten Daten - herangezogen werden. Da insbesondere mit Hilfe eines Abstandsradars die Relativgeschwindigkeiten vorausfahrender oder auch entgegenkommender Fahrzeuge direkt gemessen werden können, läßt sich die Verkehrssituation anhand der gemessenen Relativgeschwindigkeiten sehr einfach und präzise in die Zukunft extrapolieren, so daß die nach dem erfindungsgemäßen Verfahren durchzuführenden "Ausweichmanöver" zeitgerecht eingeleitet werden können.

Sofern mit Hilfe des Kamerasystems und/oder mit Hilfe eines Rückraumradars oder Rundumradars auch das Verkehrsgeschehen hinter dem eigenen Fahrzeug beobachtet wird, können auch Überholvorgänge nachfolgender Fahrzeuge rechtzeitig berücksichtigt werden.

Vorteilhafte Ausgestaltungen der Erfindung ergeben sich aus den Unteransprüchen.

Das Ausmaß der Verschiebung des Sollwertes von der Spurmitte bzw. Ideallinie ist bevorzugt von einem oder mehreren der folgenden Parameter abhängig: Lateraler Abstand des georteten Objekts auf der Nebenspur, Größe und Art dieses Objekts, Lage des Objektes auf der linken oder rechten Nebenspur. Objektentfemung längs der Fahrspur, Geschwindigkeiten des eigenen Fahrzeugs und des erfaßten Objekts bzw. Relativgeschwindigkeit des Objekts, Breite der Fahrspur. Ggf. können auch Sicht- und Witterungsverhältnisse berücksichtigt werden. Beispielsweise wird man bei nasser Fahrbahn vorzugsweise einen größeren seitlichen Versatz wählen, damit die Sicht weniger durch die von den Fahrzeugen auf den Nebenspuren aufgewirbelte Gischt beeinträchtigt wird. Die Erfassung der Sicht- und Witterungsverhältnisse und ähnlicher Parameter kann entweder automatisch oder durch Fahrerbefehl erfolgen.

Weiterhin ist es denkbar, daß der Fahrer die Möglichkeit hat, unabhängig von dem Vorhandensein von Objekten auf den Nebenspuren einen bestimmten Soll-Versatz des eigenen Fahrzeugs von der Spurmitte vorzugeben, beispielsweise um besser an vorausfahrenden Fahrzeugen vorbeischauen zu können. In diesem Fall findet bei der Bestimmung des Sollwertes für die Querposition in Abhängigkeit von Objekten auf den Nebenspuren auch der vom Fahrer gewählte "normale" Versatz Berücksichtigung.

Die Parameter, die die genaue Reaktion des Fahrzeugs auf geortete Objekte auf den Nebenspuren bestimmen, können innerhalb gewisser Grenzen, unter Berücksichtigung von Sicherheitsaspekten, auch durch geeignete Konfigurationsbefehle vom Fahrer beeinflußt werden.

Gemäß einer Weiterbildung der Erfindung ist es auch möglich, das Verfahren als ein lernfähiges System zu implementieren, das sich automatisch dem Verhalten des Fahrers anpaßt. Dies gilt insbesondere für den Fall einer Querführungsunterstützung im eigentlichen Sinne, d.h. für den Fall, daß der Fahrer selbst die Kontrolle über das Lenkungssystem behält und der Aktor des Querführungssystems lediglich unterstützend eingreift, durch Einkopplung eines ergänzenden Lenkdrehmoments in die Lenkung. In diesem Fall kann der Fahrer durch "Gegenlenken" oder "Gegenhalten" die automatische Querführung übersteuern. Das Ausmaß des "Gegenhaltens" durch den Fahrer bildet dann ein Rückkopplungssignal, das es ermöglicht, das Verhalten des Querführungssystems automatisch an die Wünsche und Vorlieben des Fahrers anzupassen.

Häufig sind Querführungssysteme so ausgelegt, daß sie bei Kurvenfahrten ein gewisses Schneiden der Kurve zulassen. Dies kann beispielsweise durch Berechnung einer von der Spurmitte abweichenden Ideallinie geschehen und/oder dadurch, daß ein Sollwert für die Querposition (entsprechend der Spurmitte oder der Ideallinie) jeweils für einen bestimmten Punkt berechnet wird, der um eine geschwindigkeitsabhängige Distanz vor der aktuellen Position des Fahrzeugs liegt. Diese Distanz (Vorausschauweite) wird häufig in der Form einer Zeitlücke (Vorausschauzeit) angegeben, die durch den Quotienten aus Vorausschauweite und Absolutgeschwindigkeit des Fahrzeugs gegeben ist. Der Eingriff in die Lenkung erfolgt dann in der Weise, daß der Ist-Wert für die Querposition des Fahrzeugs innerhalb der Vorausschauzeit mit dem Sollwert in Übereinstimmung gebracht wird. Bei Kurvenfahrten führt dieses Regelverhalten zwangsläufig dazu, daß die Kurven je nach Vorausschauweite mehr oder minder stark geschnitten werden. Bei dem erfindungsgemäßen Verfahren lassen sich nun der Sollwert für die Querposition und/oder die Vorausschauweite so anpassen, daß bei Gegenverkehr oder wenn Fahrzeuge auf einer linken Nebenspur vorhanden sind, das Kurvenschneiden bei Linkskurven unterdrückt wird und entsprechend bei Fahrzeugen auf der rechten Nebenspur das Kurvenschneiden bei Rechtskurven unterdrückt wird.

Im folgenden wird ein Ausführungsbeispiel anhand der Zeichnungen näher erläutert.

### KURZBESCHREIBUNG DER ZEICHNUNGEN

Es zeigen:
- Fig. 1: ein Blockdiagramm eines Querführungssystems für ein Kraftfahrzeug;
- Fig. 2: ein Diagramm zur Illustration der Grundzüge des erfindungsgemäßen Verfahrens;
- Fig. 3: ein Flußdiagramm zu dem eringungsgemäßen Verfahren;
- Fig. 4 und 5: Beispiele für Gewichtungsfunktionen, die in dem Verfahren nach Figur 3 benutzt werden; und
- Fig. 6: ein Diagramm zur Illustration des Verfahrens bei Kurvenfahrten.

### BESCHREIBUNG EINES AUSFÜHRUNGSBEISPIELS

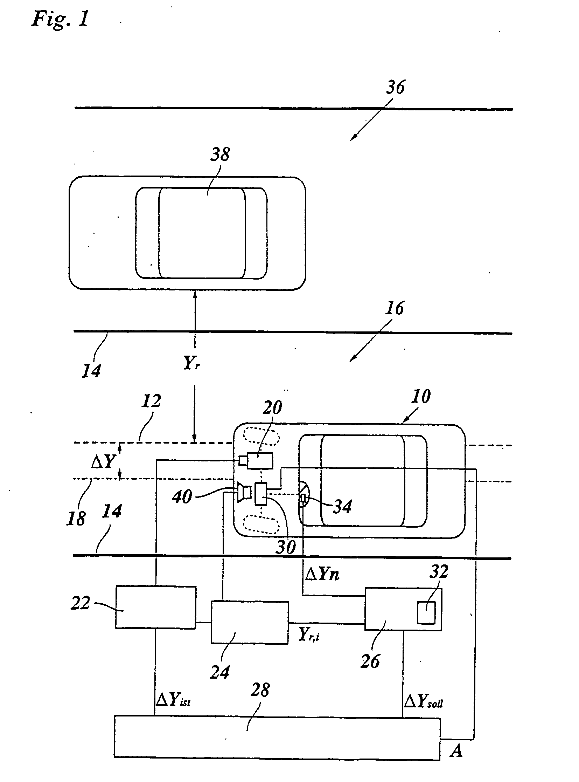

In Figur 1 ist schematisch ein Kraftfahrzeug 10 in der Draufsicht dargestellt, das etwas versetzt zur Spurmitte 12 auf einer durch Grenzen 14 definierten Spur 16 einer mehrspurigen Fahrbahn fährt. Die Längsachse 18 des Kraftfahrzeugs 10 ist strichpunktiert eingezeichnet, und die laterale Abweichung zwischen der Längsachse 18 und der Spurmitte 12 ist mit ΔY bezeichnet.

Das Kraftfahrzeug 10 ist mit einem ADAS-System ausgerüstet, das als Teilsystem ein Querführungssystem mit den folgenden, in Form eines Blockdiagramms dargestellten Komponenten umfaßt: eine durch eine Videokamera 20 und eine Bildverarbeitungseinheit 22 gebildete Sensoreinrichtung, eine Objekterkennungseinrichtung 24, eine Vorgabeeinrichtung 26 zur Vorgabe eines Sollwertes ΔYₛₒₗₗ für die Querposition des Kraftfahrzeugs 10, eine Verarbeitungseinrichtung 28 und ein Lenkungsstellglied 30, das durch ein Ausgangssignal A der Verarbeitungseinrichtung 28 angesteuert wird und in die Fahrzeuglenkung eingreift, um die Querposition des Kraftfahrzeugs 10 auf den Sollwert zu regeln.

Die Ist-Position des Fahrzeugs in der Richtung quer zur Längsachse 18 wird im gezeigten Beispiel mit der durch die Videokamera 20 und die Bildverarbeitungseinheit 22 gebildeten Sensoreinrichtung erfaßt. Dazu wertet die Bildverarbeitungseinheit 22 das von der Kamera aufgenommene Videobild aus, um die Grenzen 14 und die Lage des Kraftfahrzeugs 10 relativ zu diesen Grenzen zu erkennen. Diese Ausführungsform der Sensoreinrichtung ist lediglich als Beispiel zu verstehen und kann beispielsweise durch Magnetsensoren ersetzt werden, die magnetische Markierungen für die Fahrbahngrenzen erfassen. Ebenso könnten die Fahrbahngrenzen auch mit Hilfe von Reflektoren markiert werden, die von einem Radarsystem des Fahrzeugs erfaßt werden.

Wenn die Lage beider Grenzen 14 relativ zum Kraftfahrzeug 10 bekannt ist, läßt sich aus diesen Daten auch die Breite der Spur 16 sowie die Lage der Spurmitte 12 ermitteln. Die Sensoreinrichtung ist daher in der Lage, die Ist-Position des Kraftfahrzeugs 10. ausgedrückt durch einen Ist-Wert ΔYᵢₛₜ für die laterale Abweichung ΔY, an die Verarbeitungseinrichtung 28 zu übermitteln. Anhand eines Vergleichs des Ist-Wertes ΔYᵢₛₜ mit dem Sollwert ΔYₛₒₗₗ bildet die Verarbeitungseinrichtung 28 dann das Ausgangssignal A, das an das Lenkungsstellglied 30 übermittelt wird. Der Sollwert ΔYₛₒₗₗ wird ebenfalls als laterale Abweichung von der Spurmitte 12 ausgedrückt. Beispielsweise entsprechen positive Werte von ΔYₛₒₗₗ einer Abweichung nach rechts von der Spurmitte 12 und negative Werte einer Abweichung nach links von der Spurmitte.

Die Vorgabeeinrichtung 26 enthält einen Speicher 32. in dem ein vom Fahrer gewünschter Normalwert ΔYₙ für den Sollwert gespeichert ist. Zu der Vorgabeeinrichtung 26 gehört weiterhin ein am Lenkrad des Fahrzeugs angeordnetes Einstellelement 34, mit dem der gespeicherte Normalwert veränderbar ist. Auf diese Weise kann der Fahrer des Kraftfahrzeugs 10 die laterale Abweichung ΔY individuell nach seinen persönlichen Vorlieben oder Bedürfnissen wählen. Allerdings kann die Vorgabeeinrichtung 26 so ausgelegt sein, daß sie die vom Fahrer vorgenommene Einstellung modifiziert oder den Einstellbereich begrenzt. Beispielsweise ist es zweckmäßig, den Einstellbereich in Abhängigkeit von der mit Hilfe der Sensoreinrichtung gemessenen Breite der Spur und der bekannten Fahrzeugbreite so zu begrenzen, daß das Fahrzeug stets einen ausreichenden Sicherheitsabstand zu den Spurgrenzen einhält. Ebenso ist es denkbar, daß die mit Hilfe des Einstellelements 34 vorgenommene Einstellung die laterale Abweichung ΔY nicht in einer festen Längeneinheit angibt, sondern als Prozentwert, bezogen auf die Breite der Fahrspur oder auf den Breitenüberschuß der Fahrspur, d.h., die Differenz zwischen Spurbreite und Fahrzeugbreite. In diesem Fall würde der im Speicher 32 gespeicherte Sollwert automatisch angepaßt, wenn sich die Spurbreite ändert, ohne daß der Fahrer das Einstellelement 34 verstellen mu*ß.*

Bei der Objekterkennungseinrichtung 24, die in Fig. 1 als separater Block dargestellt ist, handelt es sich um einen Teil der Bildverarbeitungseinheit 22, der speziell dazu ausgebildet ist, Objekte auf Nebenspuren zu der von dem Kraftfahrzeug 10 befahrenen Spur 16 zu erkennen. In Fig. 1 ist eine rechte Nebenspur 36 dargestellt, auf der, als Objekt 38, ein weiteres Kraftfahrzeug fährt. Die Objekterkennungseinrichtung 24 extrahiert aus dem Videobild Ortungsdaten für das Objekt 38, die insbesondere die Position dieses Objektes sowie ggf. dessen Art und Größe angeben. Unter anderem umfassen diese Ortungsdaten den lateralen Abstand Yᵣ des Objekts 38 von der Spurmitte 12 der Spur 16. Im gezeigten Beispiel gibt Yᵣ den kleinsten lateralen Abstand an, für Objekte auf der rechten Nebenspur 36 also den Abstand zwischen der Spurmitte 12 und der linken Fahrzeugbegrenzung des Objekts 38.

Weiterhin können aus dem Videobild auch Informationen über die Längsposition des Objekts 38 längs der Spur 36 sowie über die Relativgeschwindigkeit des Objekts 38 relativ zum Kraftfahrzeug 10 extrahiert werden. Im gezeigten Beispiel ist das Kraftfahrzeug 10 jedoch zusätzlich mit einem Radarsensor 40 ausgerüstet. Dieser Radarsensor 40 dient in erster Linie zur Erfassung von vorausfahrenden Fahrzeugen auf der Spur 16 und zur Abstandsregelung im Rahmen eines Längsführungssystems. Er kann jedoch auch Informationen über Objekte auf den Nebenspuren liefern, insbesondere über den Längsabstand und die Relativgeschwindigkeit dieser Objekte sowie, bei hinreichender Winkelauflösung, auch über den lateralen Abstand Yᵣ. Durch Abgleich der von der Videokamera 20 und vom Radarsensor 40 gelieferten Informationen kann die Ortungsgenauigkeit und -sicherheit verbessert werden. Wenn bei einem Überholvorgang das Objekt 38 in den toten Winkel der Videokamera 20 und des Radarsensors 40 gerät, können die Ortungsdaten für das Objekt anhand der Relativgeschwindigkeit extrapoliert werden, unter der Annahme, daß das Objekt 38 seine Spurlage in der Nebenspur 36 beibehält. Wahlweise können zur Verbesserung der Objektortung zusätzliche sensorische Komponenten vorgesehen sein, beispielsweise zusätzliche Videokameras, ein Rundumradar und dergleichen.

In entsprechender Weise können mit Hilfe des Ortungssystems auch Objekte auf einer in Fig. 1 nicht gezeigten linken Nebenspur geortet werden. Wenn mehrere Objekte geortet werden, liefert die Objekterkennungseinrichtung 24 für jedes erfaßte Objekt einen Satz von Ortungsdaten einschließlich der lateralen Abstände Y_{r,i} an die Vorgabeeinrichtung 26. Anhand dieser Ortungsdaten berechnet die Vorgabeeinrichtung 26 den Sollwert ΔYₛₒₗₗ für die Querposition des Kraftfahrzeugs 10. Dabei wird erforderlichenfalls der im Speicher 32 abgelegte Normalwert ΔYₙ so modifiziert, daß beim Passieren des Objekts 38 ein größerer Sicherheitsabstand zu diesem Objekt eingehalten wird.

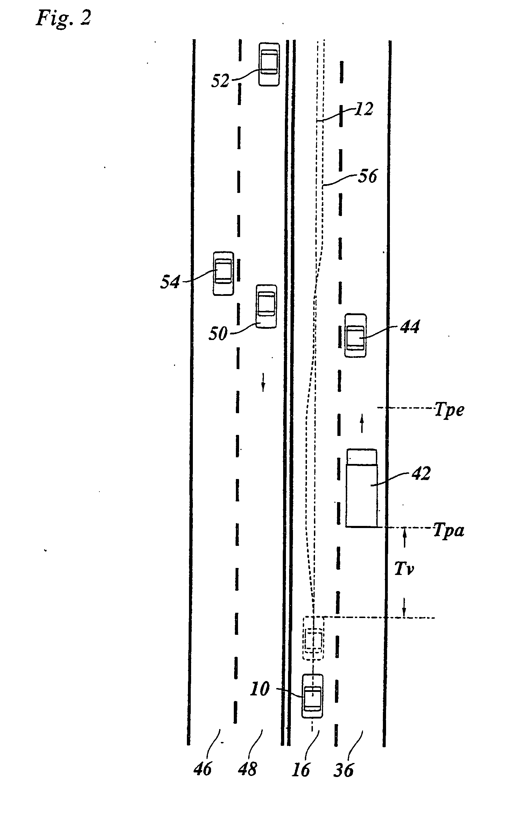

Diese Anpassung des Sollwertes und das daraus resultierende Fahrzeugverhalten werden in Fig. 2 anhand eines Beispiels illustriert.

Fig. 2 zeigt das Kraftfahrzeug 10 auf der Spur 16 sowie als Objekte auf der rechten Nebenspur 36 einen Lkw 42 und einen Pkw 44. Weiterhin zeigt Fig. 2 zwei Spuren 46 und 48 einer Gegenfahrbahn. Die unmittelbar an die Spur 16 angrenzende Spur 48 ist von der Spur 16 lediglich durch eine Fahrbahnmarkierung abgegrenzt und wird und wird hier als linke Nebenspur behandelt. Sie wird im gezeigten Beispiel von zwei Pkw befahren, die ebenfalls als Objekte 50, 52 von der Objekterkennungseinrichtung 24 geortet werden. Ein auf der Spur 46 fahrendes Fahrzeug 54 wird dagegen nicht mehr als relevantes Objekt geortet.

Auf der Spur 16 ist strichpunktiert die Spurmitte 12 und gestrichelt der Kurs des Kraftfahrzeugs 10 angegeben, der durch die periodisch von der Vorgabeeinrichtung 26 bestimmten Sollwerte ΔYₛₒₗₗ bestimmt wird.

Es wird hier angenommen, daß der Normalwert ΔYₙ, vom Fahrer auf 0 gesetzt wurde, d.h. daß der Sollwert der Spurmitte 12 entspricht, sofern sich keine Objekte auf den Nebenspuren 36 und 48 befinden. Wenn sich das Kraftfahrzeug 10 dem Lkw 42 annähert, wird ΔYₛₒₗₗ negativ. d.h. es wird etwas nach links versetzt zur Spurmitte 12 gefahren, um einen größeren Sicherheitsabstand zu dem Lkw einzuhalten. Wenn der Lkw 42 überholt worden ist, wird als nächstes der Pkw 44 überholt. Dabei wird jedoch der seitliche Versatz des Kurses 56 wieder nahezu auf 0 reduziert, weil dann dem Kraftfahrzeug 10 das Objekt 50 auf der Gegenfahrbahn entgegenkommt. Wegen der wesentlich höheren Relativgeschwindigkeit sollte zu dem entgegenkommenden Fahrzeug ein relativ großer Sicherheitsabstand eingehalten werden. Wenn auch der Pkw 44 überholt worden ist, wird ΔYₛₒₗₗ positiv, d.h., es wird nach rechts versetzt zur Spurmitte 12 gefahren, weil dann die rechte Nebenspur 36 frei ist und ein größerer Sicherheitsabstand zu dem dann entgegenkommenden Objekt 52 eingehalten werden soll.

Gemäß einem Ausführungsbeispiel könnte das Verfahren zur querführungsunterstützung etwa wie folgt ablaufen. Für die Regelung der Querposition wird eine bestimmte Vorausschauzeit Tv zugrundegelegt. Der Sollwert ΔYₛₒₗₗ wird von der Vorgabeeinrichtung 26 jeweils für einen Punkt auf der Fahrbahn 16 berechnet, der von dem Kraftfahrzeug 10 nach der Vorausschauzeit Tv erreicht wird. Dementsprechend wird das Ausgangssignal A von der Verarbeitungseinrichtung 28 so berechnet, daß die Soll-Ist-Abweichung innerhalb der Vorausschauzeit Tv auf O reduziert wird.

Für jedes geortete Objekt 42, 44, 50, 52 berechnet die Vorgabeeinrichtung 26 anhand des gemessenen Längsabstands und der Relativgeschwindigkeit des Objekts den Zeitpunkt Tₚₐ, an dem das Kraftfahrzeug 10 beginnt, das betreffende Objekt zu passieren. Im Fall des Lkw 42 ist Tₚₐ der Zeitpunkt, an dem das vordere Ende des Kraftfahrzeugs 10 die Hinterkante des Lkw 42 erreicht. Entsprechend wird für jedes Objekt ein Zeitpunkt Tₚₑ berechnet, an dem die Passage des Objektes beendet ist. Im Fall des Lkw 42 ist dies der Zeitpunkt, an dem die hintere Stoßstange des Kraftfahrzeugs 10 auf gleicher Höhe mit der vorderen Stoßstange des Lkw 42 ist. In Fig. 2 sind für die Zeitpunkte Tₚₐ und Tₚₑ jeweils die Positionen der vorderen Stoßstange des Kraftfahrzeugs 10 angegeben. Gestrichelt ist das Kraftfahrzeug 10 zu dem Zeitpunkt eingezeichnet, zu dem die Vorausschauzeit Tᵥ mit der berechneten Zeit Tₚₐ übereinstimmt. (Der Lkw 42 hat zu diesem Zeitpunkt allerdings noch nicht die in Fig. 2 gezeigte Position, sondern erreicht diese Position erst nach Ablauf der Vorausschauzeit Tᵥ) Wenn das Kraftfahrzeug 10 die gestrichelt eingezeichnete Position erreicht hat, berechnet die Vorgabeeinrichtung 26 den Sollwert ΔYₛₒₗₗ unter Berücksichtigung des Lkw 42. Zu diesem Zeitpunkt wird über das Ausgangssignal A der Lenkeingriff eingeleitet, der dazu führt, daß die Querposition des Kraftfahrzeugs 10 zum Zeitpunkt Tₚₐ mit dem berechneten Sollwert übereinstimmt.

Wenn das Kraftfahrzeug 10 und der Lkw 42 auf gleicher Höhe sind, würde von der Vorgabeeinrichtung 26 der Sollwert ΔYₛₒₗₗ für einen Zeitpunkt berechnet, der um Tᵥ später liegt. Wenn der Pkw 44 nicht vorhanden wäre, würde der Sollwert schon zu diesem Zeitpunkt wieder auf 0 zurückgeführt. Die Folge wäre, daß sich das Kraftfahrzeug 10 bereits wieder dem Lkw 42 annähern würde, bevor der Überholvorgang tatsächlich beendet ist. Dies läßt sich gemäß einer Ausführungsform der Erfindung dadurch verhindern, daß die Vorausschauzeit Tᵥ - zumindest bezogen auf das derzeit relevante Objekt 42 - auf einen kleineren Wert verringert wird, so daß die Rückkehr zur Spurmitte entsprechend später einsetzt. Für die Berücksichtigung der übrigen Objekte 44, 50 und 52 sollte dagegen weiterhin die normale (längere) Vorausschauzeit gelten. In einer modifizierten Ausführungsform wird der Sollwert, der in Bezug auf ein bestimmtes Objekt (hier den Lkw 42) berechnet wurde, so lange beibehalten, bis dieses Objekt tatsächlich passiert worden ist, also bis zum Zeitpunkt T_{pe.}

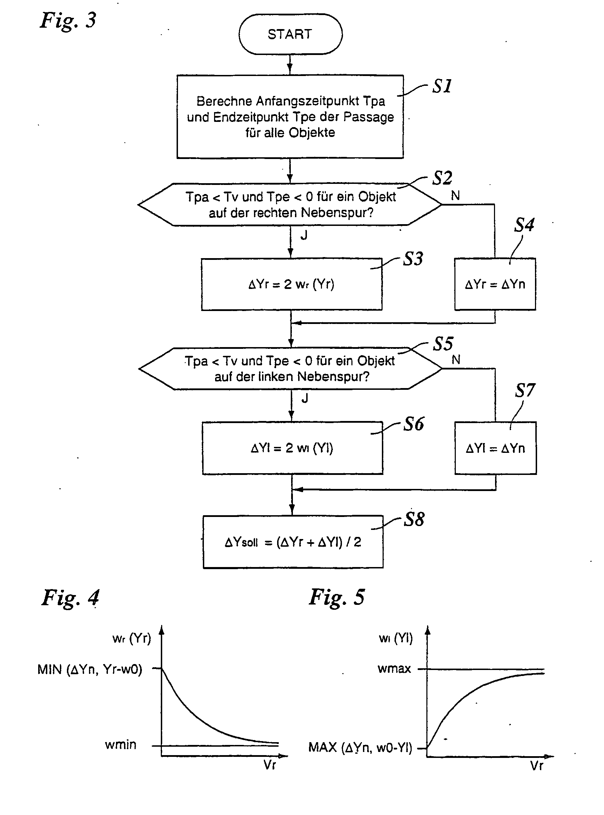

Fig. 3 zeigt ein Flußdiagramm für diese letztgenannte Verfahrensvariante, mit Berücksichtigung von Objekten auf beiden Nebenspuren 36 und 48.

Die durch das Flußdiagramm in Fig. 3 illustrierte Programmroutine wird periodisch in kurzen Zeitintervallen, etwa alle 10 ms aufgerufen. In Schritt S1 werden für alle georteten Objekte, in Fig. 2 also für die Objekte 42, 44, 50 und 52 die Zeitpunkte Tₚₐ und Tₚₑ berechnet, an denen die Passage des betreffenden Objektes beginnt bzw. endet. In Schritt S2 wird geprüft, ob für mindestens ein Objekt auf der rechten Nebenspur die Bedingungen Tₚₐ < Tᵥ und Tₚₑ < 0 erfüllt sind. Die erste Bedingung bedeutet, daß die Objektpassage innerhalb der Zeit Tv beginnen wird. Die zweite Bedingung bedeutet, daß die Objektpassage noch nicht beendet ist. Wenn beide Bedingungen erfüllt sind, sollte folglich der Sollwert ΔYₛₒₗₗ für die Querposition in Abhängigkeit von den Ortungsdaten dieses Objektes berechnet werden. Dementsprechend wird in Schritt S3 ein Wert ΔYᵣ berechnet, und zwar als das Zweifache einer Funktion wᵣ(Yᵣ) des lateralen Abstands Yᵣ des betreffenden Objekts. Der Funktionswert wᵣ(Yᵣ) ist ein Kandidat für den Sollwert, und wäre als endgültiger Sollwert zu übernehmen, wenn das betreffende Objekt auf der rechten Nebenspur das einzige relevante Objekt wäre.

Falls die in Schritt S2 abgefragten Bedingungen für zwei Objekte auf der rechten Nebenspur erfüllt sein sollten, wird der Schritt S3 für beide Objekte ausgeführt, und es wird dann der kleinere der beiden erhaltenen Werte für ΔY genommen. (Kleinere Werte für den Sollwert entsprechen einem stärkeren Versatz nach links.) Diese Situation könnte beispielsweise eintreten, wenn der Überholvorgang für den Lkw 42 noch nicht abgeschlossen ist, aber der Pkw 44 bereits in weniger als der Zeit Tᵥ erreicht wird.

Wenn die in Schritt S2 abgefragten Bedingungen für kein Objekt auf der rechten Nebenspur erfüllt sind, wird ΔYᵣ in Schritt S4 auf den Normalwert ΔYₙ gesetzt, der je nach Vorgaben des Fahrers positiv oder negativ sein kann, entsprechend einer gewünschten Abweichung von der Spurmitte nach rechts bzw. nach links.

Bei den nachfolgenden Schritten S5. S6 und S7 handelt es sich um eine Wiederholung der Schritte S2 - S4, nun jedoch für Objekte auf der linken Nebenspur. In Schritt S6 wird als ein Wert ΔY₁ das Zweifache eines Funktionswertes w₁(Y₁) berechnet, der ebenfalls ein Kandidat für den Sollwert ist und den endgültigen Sollwert bildet, wenn nur Objekte auf der linken Fahrspur zu berücksichtigen sind.

In Schritt S8 wird dann der endgültige Sollwert ΔYₛₒₗₗ berechnet, indem der Mittelwert aus den Werten ΔYᵣ und ΔY₁ gebildet wird. Dieser Sollwert wird dann in der Verarbeitungseinrichtung 28 zugrundegelegt.

Es soll zunächst angenommen werden, daß ΔYₙ vom Fahrer auf 0 gesetzt wurde. In diesem Fall ist der endgültige Sollwert ΔYₛₒₗₗ gleich wᵣ(Yᵣ), wenn nur ein relevantes Objekt auf der rechten Nebenspur geortet wurde, und gleich w₁(Y₁). wenn nur ein relevantes Objekt auf der linken Nebenspur geortet wurde. Sofern relevante Objekte auf beiden Nebenspuren geortet wurden, stellt der endgültige Sollwert einen Kompromiß zwischen den Kandidaten wᵣ(Yᵣ) und wₗ(Y₁) dar. Dieser Kompromiß entspricht dem Verlauf des Kurses 56 in Fig. 2 beim gleichzeitigen Passieren der Pkw 44 und 50.

Wenn ΔYₙ nicht gleich 0 ist und die in den Schritten S2 und S5 abgefragten Bedingungen weder für die linke noch für die rechte Nebenspur erfüllt sind, so ist der endgültige Sollwert ΔYₛₒₗₗ = ΔYₙ d.h., der Querversatz des Fahrzeugs relativ zur Spurmitte 12 entspricht der Vorgabe des Fahrers. Wenn nur die Abfrage in Schritt S2 oder nur die Abfrage in Schritt S5 ein positives Ergebnis hatte, so wird der endgültige Sollwert in Schritt S8 geringfügig, um ΔYₙ/2, modifiziert. Dies mag durchaus erwünscht sein, um übermäßig große Querbewegungen des Fahrzeugs zu mildem. Wahlweise kann das Programm jedoch so abgewandelt werden, daß ΔY, völlig unberücksichtigt bleibt, wenn eine der Abfragen in Schritt S2 oder S5 ein positives Ergebnis hat.

Die Funktionen wᵣ und w₁ geben jeweils die Sollwertverschiebung in Abhängigkeit von,der Relativgeschwindigkeit Vᵣ des betreffenden Objektes an. Beispiele für diese Funktionen sind in Fig. 4 und 5 dargestellt. Die Abhängigkeit von der Relativgeschwindigkeit trägt dem Gedanken Rechnung, daß der Sicherheitsabstand bei größerer Relativgeschwindigkeit größer sein sollte. Wie Fig. 4 zeigt, beginnt die Funktion wᵣ(Yᵣ) bei einem bestimmten (positiven oder negativen) Anfangswert (bei Vᵣ = 0) und nähert sich dann asymptotisch einem bestimmten Minimalwert wₘᵢₙ. Der Wert wₘᵢₙ ist von der Breite der Spur 16 abhängig und so gewählt, daß bei sehr großer Relativgeschwindigkeit ein möglichst großer Abstand zu dem Objekt eingehalten wird, ohne daß jedoch das Kraftfahrzeug 10 die Spur 16 verläßt.

Der Anfangswert bei der Relativgeschwindigkeit 0 ist gegeben durch MIN(ΔYₙ, Yᵣ - w₀). Darin ist w₀ ein minimaler Sicherheitsabstand zu dem betreffenden Objekt, der nicht unterschritten werden sollte. Wenn der laterale Abstand Yᵣ des Objekts auf der rechten Nebenspur sehr groß ist, so ist der Anfangswert durch ΔYₙ gegeben, d.h., das Objekt hat keinen Einfluß auf den vom Fahrer gewünschten Querversatz. Nur bei einem kleineren lateralen Abstand Yᵣ des Objekts ist der Anfangswert durch Yᵣ - w₀ gegeben und so gewählt, daß das Objekt mindestens im Abstand w₀ passiert wird. Wenn das geortete Objekt die Nebenspur verläßt und auf die vom Kraftfahrzeug befahrene Spur 16 wechselt, nimmt Yᵣ - w₀ sehr kleine negative Werte an und kann sogar unter wₘᵢₙ sinken. In diesem Fall läßt sich der Sicherheitsabstand w₀ nicht mehr einhalten, und es sollte eine Kollisionswarnung an den Fahrer ausgegeben werden.

Fig. 5 zeigt die nach analogen Prinzipien konstruierte Funktion w₁(Y₁) für Objekte auf der linken Nebenspur. Bei dieser linken Nebenspur kann es sich sowohl um eine Spur derselben Richtungsfahrbahn als auch - wie in Fig. 2 - um eine Spur der Gegenfahrbahn handeln. Im letzteren Fall werden die Relativgeschwindigkeiten Vr generell höher sein.

Die Fnktionen wᵣ und w₁ können als Funktionsvorschriften mit geeigneten Parametern, als Tabellen oder als Kennfelder im Speicher 32 der Vorgabeeinrichtung 26 abgelegt sein. Diese Funktionen können auch von der Absolutgeschwindigkeit des Kraftfahrzeugs 10 abhängig sein, etwa dergestalt, daß bei höherer Absolutgeschwindigkeit die Funktionswerte und damit die entsprechenden Querversätze des Fahrzeugs dem Betrage nach kleiner sind, so daß unkomfortabel hohe Querbeschleunigungen beim Überholen mit hoher Geschwindigkeit vermieden werden.

Wenn der Fahrer von Hand in die Lenkung eingreift, um einen Versatz von der Spurmitte 12 zu erzwingen, der größer oder kleiner als der in Schritt S8 berechnete Sollwert ist, so können die Parameter, die die Funktionen wᵣ und w₁ bestimmen, so angepaßt werden, daß der in Schritt S8 berechnete Sollwert dem anhand des Lenkeingriffs des Fahrers erkennbaren Fahrerwunsch entspricht.

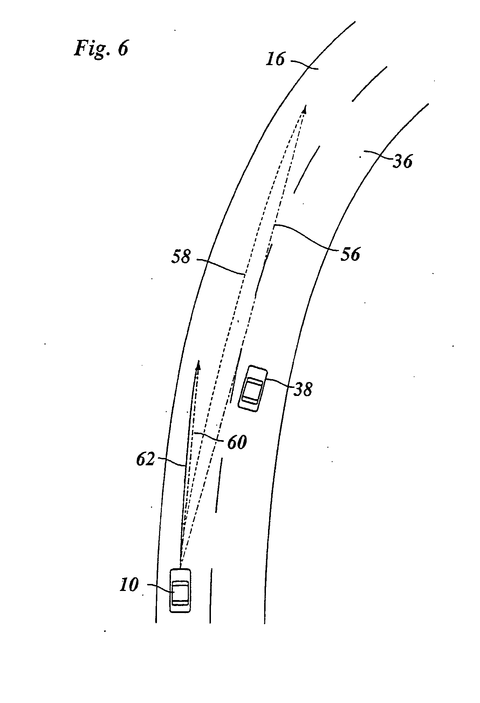

Bei dem oben beschriebenen Verfahren ist es möglich, die Vorausschauzeit Tv konstant zu halten. Bei Kurvenfahrten ist es jedoch zweckmäßig, die Vorausschauzeit und dementsprechend die Vorausschauweite, die sich durch Multiplikation der Vorausschauzeit mit der Absolutgeschwindigkeit des Kraftfahrzeugs 10 ergibt, zu variieren. Dies wird in Fig. 6 illustriert, die das Kraftfahrzeug 10 auf einem gekrümmten Fahrbahnabschnitt zeigt. Ein strichpunktierter Pfeil 58 gibt hier die Vorausschauweite an, die sich aus der regulären Vorausschauzeit Tv ergibt. Daraus ergäbe sich ein Kurs 60 des Kraftfahrzeugs 10. der in Fig. 6 durch eine gestrichelte, dünn eingezeichnete Linie angegeben ist.

Man erkennt, daß die lange Vorausschauzeit zu einem gewissen Schneiden der Kurve führt. Wenn auf der rechten Nebenspur 36 kein Objekt vorhanden ist, so ist dieses Schneiden der Kurve durchaus akzeptabel. Wenn sich jedoch ein Objekt 38 auf der Nebenspur befindet, kann es zu einer bedenklichen Annäherung an dieses Objekt kommen, selbst dann, wenn der Sollwert aufgrund der Ortung des Objekts 38 nach links versetzt worden ist. Wenn in einer Kurve ein Objekt auf der inneren Nebenspur geortet wird, ist es deshalb zweckmäßig, die Vorausschauzeit und damit die Vorausschauweite zu verkürzen, wie in Fig. 6 durch einen Pfeil 62 angegeben wird. Der sich daraus ergebende Kurs 64 des Kraftfahrzeugs 10 stellt sicher, daß stets ein ausreichender Abstand zu dem Objekt 38 eingehalten wird.

Die für das erfindungsgemäße Verfahren notwendigen Verarbeitungsvorgänge können beispielsweise von einem Mikrocomputer ausgeführt werden, der die Funktionen der Vorgabeeinrichtung 26 und der Verarbeitungseinrichtung 28 in Fig. 1 erfüllt. Wenn für die Objekterfassung kein Kamerasystem verfügbar ist, können die Ortungsdaten auch mit Hilfe des Radarsensors 40 oder eines vergleichbaren Abstandssensors, beispielsweise eines Lidar-Sensors gewonnen werden. Die Größe des georteten Objektes läßt sich dann zumindest grob anhand der Richtungsabhängigkeit und/oder der Stärke des Echosignals abschätzen, so daß zumindest zwischen einem Lkw 42 und einem Pkw 44 unterschieden werden kann: Für die Länge des Objektes, die für die Bestimmung des Zeitpunkts Tₚₑ benötigt wird, können dann Standardwerte für die verschiedenen Objektklassen (Pkw oder Lkw) zugrundegelegt werden. Bei einem Lkw können ggf. auch Echosignale ausgewertet werden, die von Reflexionen am vorderen Kotflügel oder anderen Strukturen des Lkw herrühren. In einer vereinfachten Ausführungsform kann auch stets eine konstante, hinreichend groß bemessene Objektlänge zugrundegelegt werden.

## Patentansprüche

1. Verfahren zur Querführungsunterstützung bei Kraftfahrzeugen (10), bei dem ein Sollwert (ΔYₛₒₗₗ) für die Querposition des Fahrzeugs (10) bestimmt wird, die Ist-Position (ΔYᵢₛₜ) des Fahrzeugs relativ zu den Grenzen (14) der befahrenen Spur (16) mit einer Sensoreinrichtung (20, 22) erfaßt wird und durch Soll-Ist-Vergleich ein Ausgangssignal (A) für die Querführungsunterstützung berechnet wird, **dadurch gekennzeichnet, daß** Objekte (38, 42, 44, 50, 52) auf mindestens einer Nebenspur (36, 48) geortet werden und der Sollwert (ΔYₛₒₗₗ) für die Querposition in Abhängigkeit von Ortungsdaten (Yᵣ) dieser Objekte variiert wird.

2. Verfahren nach Anspruch 1, **dadurch gekennzeichnet, daß** die Ortungsdaten den lateralen Abstand (Yᵣ) des Objekts (38) von der Spurmitte (12) der eigenen Spur (16) oder von der Querposition des eigenen Fahrzeugs (10) umfassen und daß der Sollwert (ΔYₛₒₗₗ) im Sinne einer Vergrößerung dieses lateralen Abstands beim Passieren des Objektes variiert wird.

3. Verfahren nach Anspruch 1 oder 2, **dadurch gekennzeichnet, daß** zur Ortung der Objekte (38, 42, 44, 50, 52) ein mit wenigstens einer Videokamera (20) aufgenommenes Videobild ausgewertet wird.

4. Verfahren nach einem der vorstehenden Ansprüche, **dadurch gekennzeichnet, daß** Ortungsdaten der Objekte (38, 42, 44, 50, 52) mit Hilfe eines Abstandssensors (40), insbesondere eines Radar- oder Lidar-Sensors erfaßt werden.

5. Verfahren nach einem der vorstehenden Ansprüche, **dadurch gekennzeichnet, daß** sowohl Objekte (38, 42, 44) auf einer rechten Nebenspur (36) als auch Objekte (50, 52) auf einer linken Nebenspur (48) geortet werden, wobei eine dieser Nebenspuren auch eine Spur (48) einer Gegenfahrbahn sein kann.

6. Verfahren nach einem der vorstehenden Ansprüche, **dadurch gekennzeichnet, daß** die Ortungsdaten auch den Objektabstand in Längsrichtung der Fahrspur, die Absolut- oder Relativgeschwindigkeit des Objektes und/oder die Größe des Objektes umfassen und daß die Berechnung des Sollwertes (ΔY_{Soll}) unter Berücksichtigung einer oder mehrerer dieser Größen erfolgt.

7. Verfahren nach einem der vorstehenden Ansprüche, **dadurch gekennzeichnet, daß** die Berechnung des Sollwertes (ΔYₛₒₗₗ) in Abhängigkeit von der Absolutgeschwindigkeit des eigenen Fahrzeugs (10) erfolgt.

8. Verfahren nach einem der vorstehenden Ansprüche, **dadurch gekennzeichnet, daß** die Berechnung des Sollwertes (ΔYₛₒₗₗ) in Abhängigkeit von einem vom Fahrer vorgebbaren Normalwert (ΔYₙ) erfolgt, der eine vom Fahrer gewünschte laterale Ablage des eigenen Kraftfahrzeugs (10) von der Spurmitte (12) repräsentiert.

9. Verfahren nach einem der vorstehenden Ansprüche, **dadurch gekennzeichnet, daß** Parameter, die die Abhängigkeit des Sollwertes (ΔYₛₒₗₗ) von den Ortungsdaten und/oder anderen Einflußgrößen bestimmen, in Abhängigkeit von korrigierenden Eingriffen des Fahrers in die Lenkung dynamisch, im Sinne eines selbstlernenden Systems variiert werden.

10. Verfahren nach einem der vorstehenden Ansprüche, **dadurch gekennzeichnet, daß** das Ausgangssignal (A) so berechnet wird, daß die Ist-Position (ΔYᵢₛₜ) innerhalb einer fest oder variabel vorgebbaren Vorausschauzeit (Tᵥ) auf den Sollwert (ΔYₛₒₗₗ) eingeregelt wird.

11. Verfahren nach Anspruch 10, **dadurch gekennzeichnet, daß** anhand der gemessenen Relativgeschwindigkeiten der georteten Objekte die Zeitpunkte (Tₚₐ, Tₚₑ) vorausberechnet werden, zu denen das Kraftfahrzeug (10) voraussichtlich das betreffende Objekt passieren wird, und daß für die Berechnung des Sollwertes (ΔYₛₒₗₗ) die Ortungsdaten derjenigen Objekte herangezogen werden, die nach Ablauf der Vorausschauzeit (Tᵥ) passiert werden.

12. Verfahren nach Anspruch 11, **dadurch gekennzeichnet, daß** bei Überholvorgängen die Vorausschauzeit (Tᵥ) reduziert wird, während das Objekt überholt wird.

13. Verfahren nach einem der Ansprüche 10 bis 12, **dadurch gekennzeichnet, daß** in Kurven die Vorausschauzeit (Tᵥ) reduziert wird.

14. Vorrichtung zur Querführungsunterstützung bei Kraftfahrzeugen (10), mit einer Einrichtung (26) zur Bestimmung eines Sollwertes (ΔYₛₒₗₗ) für die Querposition des Fahrzeugs (10), einer Sensoreinrichtung (20, 22) zur Erfassung der Ist-Position (ΔYᵢₛₜ) des Fahrzeugs relativ zu den Grenzen (14) der befahrenen Spur (16), einer Vergleichseinrichtung (28) zur Berechnung eines Ausgangssignal (A) für die Querführungsunterstützung durch Soll-Ist-Vergleich und einem Ortungssystem, das in der Lage ist, Objekte (38, 42, 44, 50, 52) auf mindestens einer Nebenspur (36, 48) zu Orten, **gekennzeichnet durch** eine Einrichtung zum Variieren des Sollwertes (ΔYₛₒₗₗ) für die Querposition in Abhängigkeit von den Ortungsdaten (Yᵣ) dieser Objekte.

## Claims

1. Method for providing lateral guidance assistance in motor vehicles (10), in which a setpoint value (ΔYₛₑₜₚ) is determined for the lateral position of the vehicle (10), the actual position (ΔY_{act}) of the vehicle relative to the boundaries (14) of the lane (16) being travelled on is sensed with a sensor device (20, 22) and an output signal (A) for the lateral guidance assistance is calculated by means of a setpoint/actual value comparison, **characterized in that** the positions of objects (38, 42, 44, 50, 52) on at least one secondary lane (36, 48) are determined and the setpoint value (ΔYₛₑₜₚ) for the lateral position is varied as a function of locating data (Yᵣ) of these objects.

2. Method according to Claim 1, **characterized in that** the locating data comprises the lateral distance (Yᵣ) of the object (38) from the centre (12) of the driver's own lane (16) or from the lateral position of the driver's own vehicle (10), and **in that** the setpoint value (ΔYₛₑₜₚ) is varied in order to increase this lateral distance when the object passes.

3. Method according to Claim 1 or 2, **characterized in that** a video image which is recorded by means of at least one video camera (20) is evaluated in order to locate the object (38, 42, 44, 50, 52).

4. Method according to one of the preceding claims, **characterized in that** locating data of the objects (38, 42, 44, 50, 52) is registered using a distance sensor (40), in particular a radar sensor or lidar sensor.

5. Method according to one of the preceding claims, **characterized in that** both the positions of objects (38, 42, 44) on a right-hand adjacent lane (36) and those of objects (50, 52) on a left-hand adjacent lane (48) are determined, in which case one of these adjacent lanes can also be a lane (48) of an oncoming carriageway.

6. Method according to one of the preceding claims, **characterized in that** the locating data also comprises the distance from the object in the longitudinal direction of the lane, the absolute speed or relative speed of the object and/or the size of the object, and **in that** the setpoint value (ΔYₛₑₜₚ) is calculated taking into account one or more of these variables.

7. Method according to one of the preceding claims, **characterized in that** the setpoint value (ΔYₛₑₜₚ) is calculated as a function of the absolute speed of the driver's own vehicle (10).

8. Method according to one of the preceding claims, **characterized in that** the setpoint value (ΔYₛₑₜₚ) is calculated as a function of a normal value (ΔYₙ) which can be predefined by the driver and which represents a lateral offset of the driver's own motor vehicle (10) from the centre (12) of the lane, which is desired by the driver.

9. Method according to one of the preceding claims, **characterized in that** parameters which determine the dependence of the setpoint value (ΔYₛₑₜₚ) on the locating data and/or other influencing variables are varied dynamically as a function of correcting interventions by the driver in the steering system in the sense of a self-learning system.

10. Method according to one of the preceding claims, **characterized in that** the output signal (A) is calculated in such a way that the actual position (ΔY_{act}) is adjusted to the setpoint value (ΔYₛₑₜₚ) within a permanently or variably predefinable preview time (Tv).

11. Method according to Claim 10, **characterized in that** the times (Tpₐ, Tpₑ) at which the motor vehicle (10) is expected to pass the respective object are calculated in advance by reference to the measured relative speeds of the objects whose positions are determined, and **in that** the locating data of those objects which are passed after the preview time (Tᵥ) has expired is used to calculate the setpoint value (ΔYₛₑₜₚ).

12. Method according to Claim 11, **characterized in that** in the case of overtaking manoeuvres, the preview time (Tᵥ) is reduced while the object is being overtaken.

13. Method according to one of Claims 10 to 12, **characterized in that** the preview time (Tᵥ) is reduced in bends.

14. Device for providing lateral guidance assistance in motor vehicles (10), having an apparatus (26) for determining a setpoint value (ΔYₛₑₜₚ) for the lateral position of the vehicle (10), a sensor device (20, 22) for sensing the actual position (ΔY_{act}) of the vehicle relative to the boundaries (14) of the lane (16) being travelled on, a comparator device (28) for calculating an output signal (A) for the lateral guidance assistance by means of a setpoint/actual value comparison and a locating system which is capable of determining the position of objects (38, 42, 44, 50, 52) on at least one adjacent lane (36, 48), **characterized by** a device for varying the setpoint value (ΔYₛₑₜₚ) for the lateral position as a function of the locating data (Yᵣ) of these objects.

## Revendications

1. Procédé d'assistance au guidage transversal de véhicules automobiles (10) selon lequel on détermine une valeur de consigne (ΔY_{cons}) de la position transversale du véhicule (10), on saisit la position réelle (ΔYᵣₑₑₗ) du véhicule par rapport aux limites (14) de la voie (16) parcourue à l'aide d'une installation de capteur (20, 22) et en comparant la valeur de consigne et la valeur réelle on calcule un signal de sortie (A) pour l'assistance au guidage transversal,
**caractérisé en ce qu'**
on localise les objets (38, 42, 44, 50, 52) sur au moins une voie auxiliaire (36, 48) et on modifie la valeur de consigne (ΔY_{cons}) de la position transversale selon les données de localisation (Yᵣ) de ces objets.

2. Procédé selon la revendication 1,
**caractérisé en ce que**
les données de localisation comprennent la distance latérale (Yᵣ) de l'objet (38) par rapport au milieu (12) de la voie propre (16) ou de la position transversale du propre véhicule (10) et
on modifie la valeur de consigne (ΔY_{cons}) dans le sens d'une augmentation de cette distance latérale au passage de l'objet.

3. Procédé selon la revendication 1 ou 2,
**caractérisé en ce que**
pour localiser les objets (38, 42, 44, 50, 52) on exploite une image vidéo prise par au moins une caméra vidéo (20).

4. Procédé selon l'une quelconque des revendications précédentes,
**caractérisé en ce qu'**
on saisit les données de localisation des objets (38, 42, 44, 50, 52) à l'aide d'un capteur de distance (40), notamment d'un capteur radar ou lidar.

5. Procédé selon l'une quelconque des revendications précédentes,
**caractérisé en ce qu'**
on localise à la fois les objets (38, 42, 44) sur une voie auxiliaire droite (36) et aussi les objets (50, 52) sur une voie auxiliaire gauche (48) et l'une de ces voies auxiliaires peut également être la voie (48) empruntée par la circulation inverse.

6. Procédé selon l'une quelconque des revendications précédentes,
**caractérisé en ce que**
les données de localisation comprennent également la distance de l'objet dans la direction longitudinale de la voie, la vitesse absolue ou la vitesse relative de l'objet et/ou la taille de l'objet et le calcul de la valeur de consigne (ΔY_{cons}) se fait en tenant compte d'une ou plusieurs de ces grandeurs.

7. Procédé selon l'une quelconque des revendications précédentes,
**caractérisé en ce que**
le calcul de la valeur de consigne (ΔY_{cons}) se fait en fonction de la vitesse absolue du propre véhicule (10).

8. Procédé selon l'une quelconque des revendications précédentes,
**caractérisé en ce que**
le calcul de la valeur de consigne (ΔY_{cons}) se fait en fonction de la valeur normale (ΔYₙ) prédéfinie par le conducteur qui représente le déport latéral souhaité par le conducteur de son propre véhicule (10) par rapport au milieu (12) de la voie.

9. Procédé selon l'une quelconque des revendications précédentes,
**caractérisé en ce qu'**
on modifie les paramètres qui déterminent la dépendance de la valeur de consigne (ΔY_{cons}) des données de localisation et/ou d'autres grandeurs d'influence en fonction des interventions de corrections du conducteur sur le guidage, de manière dynamique dans le sens d'un système expert.

10. Procédé selon l'une quelconque des revendications précédentes,
**caractérisé en ce que**
le signal de sortie (A) se calcule pour que la position réelle (ΔYᵣₑₑₗ) soit régulée dans une durée prévisionnelle (Tᵥ) prédéfinie de manière fixe ou variable suivant la valeur de consigne (ΔY_{cons}).

11. Procédé selon la revendication 10,
**caractérisé en ce qu'**
à l'aide des vitesses relatives mesurées pour les objets localisés on calcule préalablement les instants (Tₚₐ, Tₚₑ) auxquels le véhicule (10) passera probablement l'objet concerné et pour le calcul de la valeur de consigne (ΔY_{cons}) on utilise les données de localisation des objets qui seront dépassés à la fin du temps prévisionnel (Tᵥ).

12. Procédé selon la revendication 11,
**caractérisé en ce que**
lors de manoeuvres de dépassement on réduit le temps prévisionnel (Tᵥ) pendant lequel on dépasse l'objet.

13. Procédé selon l'une quelconque des revendications 10 à 12,
**caractérisé en ce qu'**
on réduit le temps prévisionnel (Tᵥ) dans les courbes.

14. Dispositif d'assistance au guidage transversal de véhicule automobiles (10) comprenant une installation (26) pour déterminer une valeur de consigne (ΔY_{cons}) de la position transversale du véhicule (10), une installation de capteur (20, 22) pour détecter la position réelle (ΔYᵣₑₑₗ) du véhicule par rapport aux limites (14) de la voie empruntée (16), une installation de comparaison (28) pour calculer un signal de sortie (A) pour l'assistance au guidage transversal par comparaison entre la valeur réelle et la valeur de consigne, et un système de location qui est en mesure de localiser les objets (38, 42, 44, 50, 52) au moins sur une voie auxiliaire (36, 48),
**caractérisé par**
une installation pour modifier la valeur de consigne (ΔY_{cons}) pour la position transversale en fonction des données de localisation (Yᵣ) de ces objets.
